# EUROPÄISCHE PATENTSCHRIFT

(11) **EP 2 292 942 B1**
(45) Veröffentlichungstag und Bekanntmachung des Hinweises auf die Patenterteilung: **04.03.2015**
(21) Anmeldenummer: 10174659.2
(22) Anmeldetag: 31.08.2010
(51) Int. Cl.: F16C 31/06, F16C 29/06

(54) **Linearstellglied mit Stützlager**
Linear actuator with support bearing
Actuateur linéaire doté d'un palier de support

(30) Priorität: 02.09.2009 DE 102009043936
(43) Veröffentlichungstag der Anmeldung: 09.03.2011
(73) Patentinhaber: VUES Brno s.r.o., 65765 Brno (CZ)
(72) Erfinder: Haaß, Timo, 64572 Büttelborn (DE); Havelka, Jiri, 61600 Brno (CZ); Müller, Oldrich, 63500 Brno (CZ)
(74) Vertreter: Katscher Habermann Patentanwälte

(56) Entgegenhaltungen:
- CH-A5- 618 239
- DE-A1- 3 607 634
- DE-A1-102005 040 204

## Beschreibung

Die Erfindung betrifft ein Linearstellglied mit einem Stützlager.

Zur Umwandlung einer rotatorischen Antriebskraft in eine Linearbewegung sind Linearstellglieder bekannt, die eine Hohlwelle und eine relativ zu der Hohlwelle drehbar und längsverschiebbar gelagerte Spindel aufweisen. Die Spindel weist üblicherweise einen Außengewindeabschnitt auf, der mit einer Gewindemutter in Eingriff steht, die drehfest an der Hohlwelle angeordnet bzw. befestigt ist. Je nach Ausführungsform des Linearstellglieds ist entweder die Gewindespindel drehfest relativ zu einem umgebenden Gehäuse festgelegt, so dass durch eine vorgebbare Rotationsbewegung der drehbar gelagerten Hohlwelle eine axiale Verlagerung der Hohlwelle relativ zu der Spindel möglich ist, oder aber die Hohlwelle unbeweglich an dem Gehäuse befestigt und eine angetriebene Rotationsbewegung und dadurch bewirkte axiale Verlagerung der Spindel möglich.

Aus der Praxis sind unterschiedliche Ausgestaltungen derartiger Linearstellglieder bekannt. Sofern die Spindel an beiden Enden über die Hohlwelle hinausragt, die dann die Spindel abschnittsweise umgibt, ist zusätzlich zu dem Gewindeeingriff eine weitere radiale bzw. axiale Lagerung der Spindel innerhalb der Hohlwelle erfahrungsgemäß wenig zweckmäßig und in den meisten Fällen nicht vorgesehen.

Es sind auch Linearstellglieder bekannt, bei denen die Spindel lediglich ein über die Hohlwelle hinausragendes Ende aufweist, während sich das andere Ende der Spindel immer innerhalb der Hohlwelle befindet. Insbesondere bei langen Spindeln ist in diesen Fällen eine radiale bzw. axiale Lagerung der Spindel innerhalb der Hohlwelle in ihrem Endbereich vorteilhaft, um die während einer Betätigung des Linearstellglieds gegebenenfalls auf die Spindel einwirkenden radialen Kräfte aufnehmen und auf die Hohlwelle übertragen zu können, ohne dass eine unerwünschte Verformung der Spindel, oder eine Beeinträchtigung der Funktionsweise, oder Reduzierung der Lebensdauer während einer axialen Verlagerung der Spindel befürchtet werden muss.

Aus der Praxis sind Stützlager zur drehbaren und längsverschiebbaren Lagerung der Spindel bekannt, die als Gleitlager ausgestaltet sind und die mindestens einen der Spindel gegenüber der Hohlwelle abstützenden Stützkörper aufweisen. Der Stützkörper führt bei einer Rotationsbewegung und/oder einer axialen Verlagerung der Spindel relativ zu der Hohlwelle eine gleitende Bewegung aus. Als nachteilig wird dabei empfunden, dass trotz einer möglichst vorteilhaften Ausgestaltung und Materialwahl des Stützkörpers während der gleitenden Bewegung des Stützkörpers eine unvermeidbare Gleitreibung auftritt, die insbesondere bei einer längeren Betriebsdauer zu einem Abrieb im Bereich des Stützlagers führen kann, wodurch nahezu unvermeidbar die Funktionsfähigkeit des Stützlagers vermindert, sowie eine Beeinträchtigung angrenzender Bauteile durch den Abrieb herbeigeführt werden kann.

Es wird deshalb als eine Aufgabe der vorliegenden Erfindung angesehen, ein Linearstellglied so auszugestalten, dass eine möglichst geringe Reibung bei einer Bewegung des Stützlagers relativ zu der umgebenden Hohlwelle auftritt.

Diese Aufgabe wird erfindungsgemäß dadurch gelöst, dass das Stützlager über eine Umfangsfläche der Spindel vorspringende, in einer Wälzkörperführung gelagerte Wälzkörper aufweist, welche eine innere Umfangsfläche der Hohlwelle berühren und die Spindel an der Hohlwelle abstützen. Durch die Verwendung von Wälzkörpern, welche zwischen der Spindel und der die Spindel umgebenden Hohlwelle in einer Wälzkörperführung gelagert sind, und bei einer Bewegung der Spindel relativ zu der Hohlwelle auf der inneren Umfangsfläche der Hohlwelle abrollen, wird eine gleitende Bewegung und eine damit einhergehende Gleitreibung bei einer Bewegung der Spindel relativ zu der Hohlwelle vermieden. Es tritt nahezu ausschließlich Rollreibung auf, wobei bei einer geeigneten Ausgestaltung der Wälzkörper und der die Wälzkörper aufnehmenden Wälzkörperführung deutlich geringere Reibungseffekte und insbesondere wesentlich geringere Reibungsverluste als bei einem Gleitlager auftreten.

Die Anzahl und Ausgestaltung der Wälzkörper, die in der Wälzkörperführung angeordnet sind und die Spindel an der Hohlwelle abstützen, kann in Abhängigkeit von den üblicherweise auftretenden Radialkräften, oder im Hinblick auf die maximal zulässige Rotationsgeschwindigkeit der Spindel relativ zu der Hohlwelle, in geeigneter Weise vorgegeben werden.

Erfindungsgemäß ist weiterhin vorgesehen, dass die Wälzkörperführung einen schraubenförmigen Verlauf längs der Umfangsfläche der Spindel und eine Steigung in axialer Richtung aufweist. Der schraubenförmige Verlauf der Wälzkörperführung bzw. deren Steigung kann an die axiale Verlagerung der Spindel während einer Drehbewegung relativ zu der Hohlwelle angepasst sein, so dass die Wälzkörper idealerweise eine reine Abrollbewegung längs der inneren Umfangsfläche der Hohlwelle durchführen, und insbesondere keine mit Reibung einhergehende Verschiebung während des Abrollvorgangs erfolgt.

Erfindungsgemäß ist weiterhin vorgesehen, dass die Hohlwelle, innerhalb eines maximal zulässigen Bereichs einer Verlagerung der Spindel, bei dem sich ein erstes Ende der Spindel mit dem dort angeordneten Stützlager immer innerhalb der dieses Ende umgebenden Bereichs der Hohlwelle befindet, eine zylindrische Ausnehmung mit einer in axialer Richtung gleichbleibenden Querschnittsfläche aufweist.

Die Wälzkörperführung weist zweckmäßigerweise einen geschlossenen Verlauf auf, so dass die in der Wälzkörperführung befindlichen Wälzkörper kontinuierlich in der Wälzkörperführung verlagert werden, und dabei eine Abrollbewegung ausführen können, ohne dass der Abrollvorgang durch Endanschläge oder dergleichen begrenzt, und dadurch eine Gleitbewegung der Wälzkörper erzwungen wird. Zu diesem Zweck ist vorgesehen, dass die Wälzkörperführung ein erstes Ende und ein zweites Ende aufweist, die nach einer Umfangsumrundung längs der Umfangsfläche der Spindel einen axialen Versatz aufweisen, und mittels eines Umlenkungselements miteinander verbunden sind. Das Umlenkungselement verbindet die beiden Endbereiche der zweckmäßigerweise geradlinig verlaufenden Wälzkörperführung miteinander, so dass die darin befindlichen Wälzkörper, nach einer Umfangsumrundung der Spindel durch das Umlenkungselement hindurch, im Wesentlichen axial verlagert werden, und in eine Ausgangsposition gebracht werden, von der aus eine erneute Umfangsumrundung möglich ist.

Um im Bereich des Umlenkungselements eine Abrollbewegung der Wälzkörper an der umgebenden Hohlwelle zu vermeiden, deren Bewegungsrichtung nicht zumindest näherungsweise mit der Rotation und gleichzeitigen axialen Verlagerung der Spindel relativ zu der Hohlwelle übereinstimmt, ist vorgesehen, dass das Umlenkungselement einen radial nach innen versetzten Abschnitt aufweist, innerhalb dessen die darin geführten Wälzkörper die umgebende Hohlwelle nicht berühren. In diesem Abschnitt innerhalb des Umlenkungselements tragen die darin befindlichen Wälzkörper nicht zu einer radialen oder axialen Abstützung der Spindel in der Hohlwelle bei. Die Wälzkörper können demzufolge innerhalb des radial nach innen versetzten Abschnitts im Wesentlichen kräftefrei verlagert werden, so dass die dabei auftretenden Reibungseffekte minimal sind.

Bei langen Spindeln oder großen Radialkräften, die durch das Stützlager aufgenommen, und mit möglichst geringer Reibung auf die umgebende Hohlwelle übertragen werden sollen, kann in vorteilhafter Weise vorgesehen sein, dass das Stützlager mehrere axial benachbart angeordnete Wälzkörperführungen aufweist. Es ist ebenfalls denkbar, dass lediglich eine Wälzkörperführung vorgesehen ist, die einen schraubenförmigen Verlauf und mehrere Umfangsumrundungen aufweist, bevor durch ein geeignetes Umlenkungselement die dann nicht mehr unmittelbar benachbarten Endbereiche der schraubenförmigen Wälzkörperführung miteinander verbunden werden.

Eine einfach herstellbare und für die meisten Anwendungsfälle mechanisch ausreichend belastbare Ausgestaltung des Erfindungsgedankens sieht vor, dass die Wälzkörper Kugeln sind. Insbesondere bei einer derartigen Ausgestaltung der Wälzkörper ist es vorteilhaft, dass die Wälzkörperführung eine hinterschnittene Nut ist. Zur Herstellung eines derart ausgestalteten Stützlagers können die im Zusammenhang mit der Herstellung von Kugelgewindetrieben entwickelten und aus der Praxis bekannten Herstellungsverfahren verwendet werden.

Gemäß einer besonders vorteilhaften Ausgestaltung des Erfindungsgedankens ist vorgesehen, dass das Stützlager gesondert herstellbar, und mit der Spindel verbindbar ist. Das Stützlager muss in diesem Fall nicht in aufwendigen Verfahrensschritten im Wesentlichen einstückig aus einem Endbereich der Spindel herausgearbeitet werden. Das Stützlager kann als gesonderte Komponente separat hergestellt werden. Auch die Herstellung der Spindel und der damit verbundene Kostenaufwand können dadurch reduziert werden. Das Stützlager muss lediglich mittels einer geeigneten Befestigungsvorrichtung, beispielsweise klemmend oder rastend, mit der Spindel verbunden oder mittels einer Schraubverbindung mit einem Ende der Spindel verschraubt werden. Sollten trotz der äußerst geringen Reibungseffekte eine Beeinträchtigung oder eine Funktionsstörung des Stützlagers während der Betriebsdauer auftreten, so könnte das Stützlager in einfacher Weise von der Spindel gelöst und entweder repariert bzw. gewartet oder aber ausgetauscht werden.

Mit einer Antriebseinrichtung kann eine Drehbewegung der Spindel relativ zu der Hohlwelle und eine dadurch bewirkte axiale Verlagerung der Spindel relativ zu der Hohlwelle erzeugt werden.

. Ein erfindungsgemäßes Linearstellglied weist auf Grund der äußerst geringen Reibung des Stützlagers eine höhere Lebensdauer als die aus der Praxis bekannten Linearstellglieder mit einem Gleitlager auf. Eine Beeinträchtigung der Funktionsweise des Linearstellglieds durch Abrieb, wie er bei Verwendung von Gleitlagern nahezu unvermeidbar ist, ist auch bei einer lang andauernden Benutzung und Betätigung des Linearstellglieds kaum zu befürchten. Das Linearstellglied lässt sich zudem schneller und kostengünstiger herstellen als vergleichbare Linearstellglieder mit einem Gleitlager, das gegebenenfalls noch eine rotative Entkopplung aufweist.

Nachfolgend wird ein Ausführungsbeispiel des Erfindungsgedankens näher erläutert, das in der Zeichnung dargestellt ist. Es zeigt:
Fig. 1 eine Schnittansicht eines lediglich schematisch angedeuteten Linearstellglieds mit einer Spindel, die über ein Stützlager an einer die Spindel umgebenden Hohlwelle abgestützt ist,
Fig. 2 eine vergrößert dargestellte Abbildung eines Endes der Spindel mit dem daran befestigten Stützlager in teilweise geschnittener Darstellung,
Fig. 3 eine Seitenansicht des Stützlagers gemäß Fig. 2 aus einem anderen Blickwinkel,
Fig. 4 eine Schnittansicht des Stützlagers längs der Linie IV-IV in Fig. 3,
Fig. 5 eine Ansicht des Stützlagers mit einem daran anschließenden Endbereich der Spindel in vergrößerter Darstellung und
Fig. 6 eine Ansicht des Stützlagers gemäß Fig. 5 aus einer anderen Perspektive.

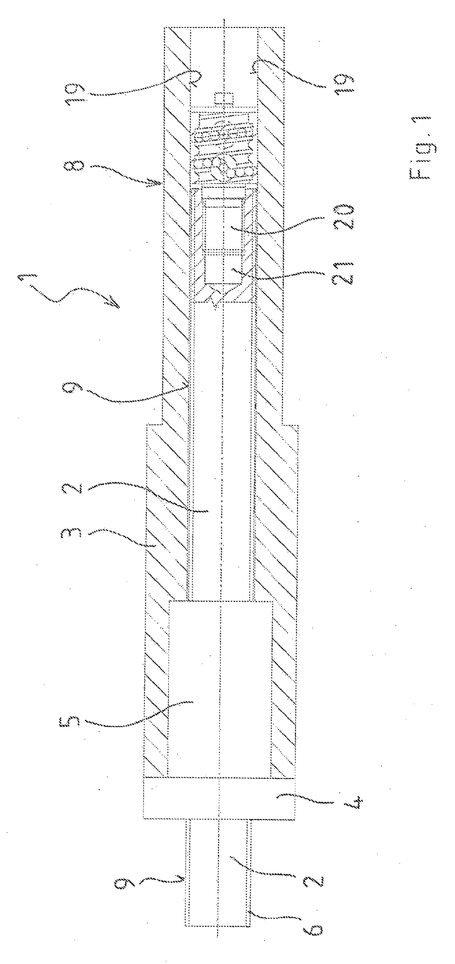

In Fig. 1 ist lediglich beispielhaft und schematisch ein Linearstellglied 1 dargestellt, das eine Spindel 2 und eine Hohlwelle 3 aufweist, wobei die Spindel 2 drehbar und längsverschiebbar in der Hohlwelle 3 gelagert ist. Das Linearstellglied weist weiterhin eine lediglich schematisch angedeutete, an einem Befestigungsflansch 4 festgelegte Spindelmutter 5 auf, mit welcher durch Rotation relativ zur Spindel 2 eine Axialbewegung erzeugt werden kann. Bei dem dargestellten Ausführungsbeispiel ist die Hohlwelle 3 unbeweglich an der Spindelmutter 5 festgelegt. Die Spindel 2 weist ein Außengewinde 6 auf, welches mit einer drehfest an der Hohlwelle 3 angeordneten Spindelmutter 5 in Eingriff steht, so dass bei einer Rotation der Spindel 2 relativ zu der Hohlwelle 3 eine axiale Verlagerung der Spindel 2 bewirkt wird. Die durch die Rotationsbewegung hervorgerufene axiale Verschiebung der Spindel 2 ist im Wesentlichen von der Steigung des Außengewindes 6 der Spindel 2 abhängig.

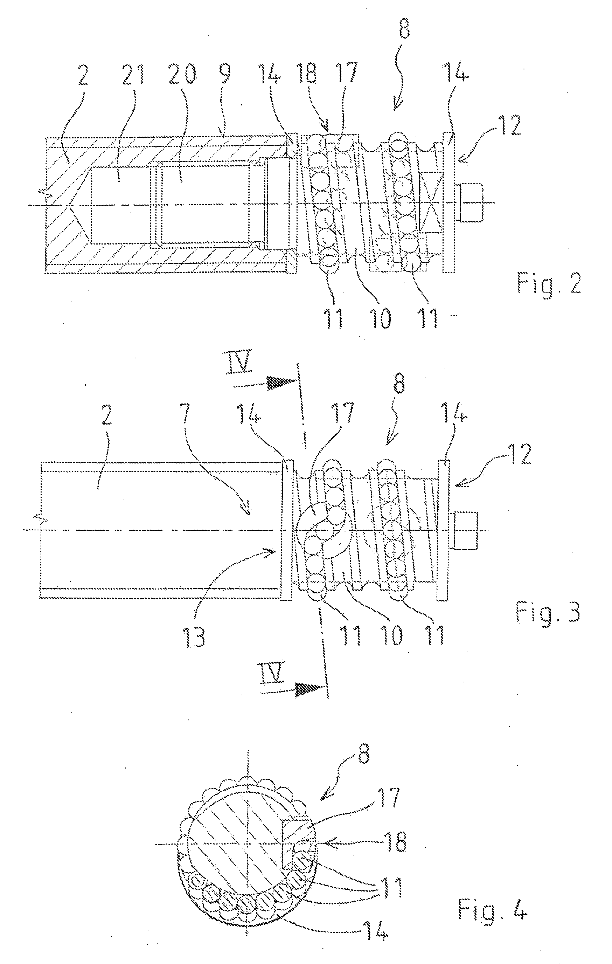

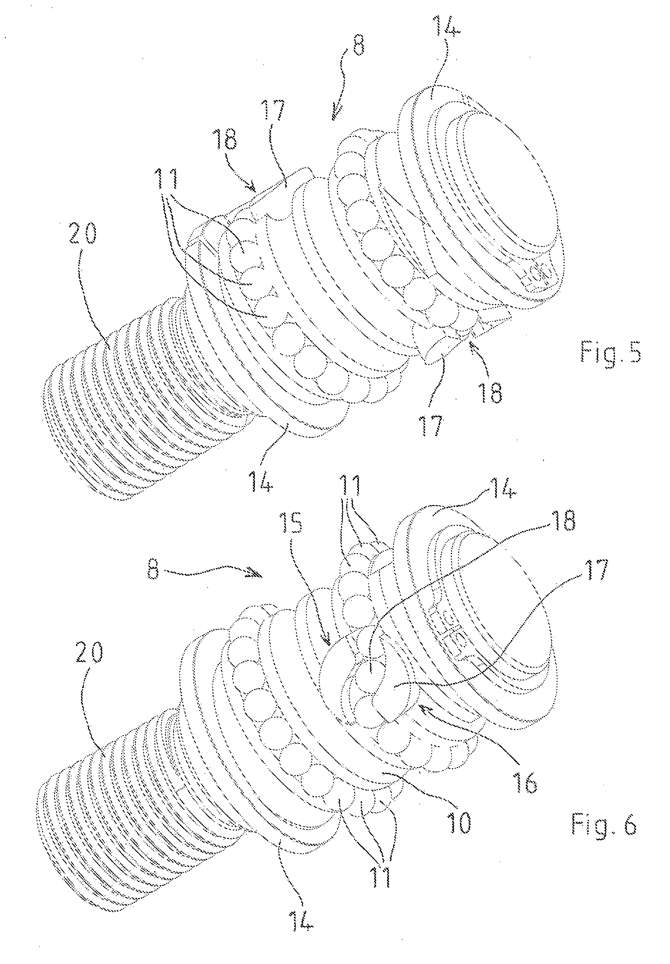

Innerhalb des maximal zulässigen Bereichs einer Verlagerung der Spindel 2 relativ zu der Hohlwelle 3 befindet sich ein erstes Ende 7 der Spindel 2 immer innerhalb der dieses Ende 7 umgebenden Hohlwelle 3. An dem ersten Ende 7 der Spindel 2 ist ein Stützlager 8 lösbar befestigt. In den Fig. 2 bis 6 sind verschiedene Ansichten des Stützlagers 8 vergrößert und detailliert dargestellt.

Das Stützlager 8 ist als Loslager ausgestaltet und weist zwei schraubenförmig längs einer Umfangsfläche 9 des Stützlagers 8 verlaufenden Nuten 10 auf, die als Wälzkörperführung für die darin angeordneten Kugeln 11 bzw. Wälzkörper dienen. Das Stützlager 8 ist in axialer Richtung an den beiden entgegengesetzten Enden 12, 13 mit Dichtungsscheiben 14 versehen, so dass ein in dem Stützlager befindliches Schmiermittel für die Kugeln 11 bzw. die Wälzkörper nicht seitlich austreten und in benachbarte Bereiche innerhalb der Hohlwelle 3 gelangen kann.

Das Stützlager 8 weist zwei in axialer Richtung benachbart angeordnete Wälzkörperführungen auf. Jede Wälzkörperführung weist eine schraubenförmig verlaufende Nut mit einem ersten Ende 15 und einem zweiten Ende 16 auf, die auf Grund des schraubenförmigen Verlaufs der Nut längs der Umfangsfläche 9 einen seitlichen Versatz zueinander aufweisen. Die beiden Enden 15, 16 der Nut sind durch ein Verbindungselement 17 derart miteinander verbunden, dass die in der Nut 10 befindlichen und darin geführten Kugeln 11 von dem zweiten Ende 16 der Nut 10 zu dem ersten Ende 15 der Nut 10 verlagert bzw. umgelenkt werden. In Abhängigkeit von der Drehrichtung der Spindel 2, bzw. des Stützlagers 8, relativ zu der umgebenden Hohlwelle 3, können die in der Nut 10 befindlichen Kugeln 11 auch von dem ersten Ende 15 der Nut zu dem zweiten Ende 16 der Nut verlagert bzw. umgelenkt werden.

Das Umlenkungselement 17 weist einen radial nach innen vorspringenden Abschnitt 18 auf, innerhalb dessen die darin geführten Kugeln 11 nicht eine innere Umfangsfläche 19 der das Stützlager 8 umgebenden Hohlwelle 3 berühren. Dagegen ragen die innerhalb der schraubenförmig verlaufenden Nut 10 geführten Kugeln 11 über die Umfangsfläche der Spindel 2 heraus. Bei einer Bewegung der Spindel 2 relativ zu der Hohlwelle 3, führen die die Hohlwelle 3 berührenden Kugeln 11 eine erzwungene Abrollbewegung durch. Die erzwungene Abrollbewegung der Kugeln 11, in dem schraubenförmigen Verlauf der Nut 10, erzwingt eine daran angepasste Verlagerung der Kugeln 11 durch das Umlenkungselement 17, wobei die Kugeln 11, in dem radial nach innen vorspringenden Abschnitt 18 innerhalb des Umlenkungselements 17, nicht die umgebende Hohlwelle 3 berühren, und deshalb nicht zur radialen bzw. axialen Abstützung des ersten Endes 7 der Spindel 2 innerhalb der Hohlwelle 3 beitragen.

Gleichzeitig wird in dem Umlenkungselement 17 die für eine ununterbrochene Abrollbewegung der Kugeln 11 in der Nut 10 notwendige Umlenkung, bzw. axiale Verlagerung, ohne Kontakt zu der umgebenden Hohlwelle 3 vorgenommen, so dass keine bzw. äußerst geringe Reibungseffekte auftreten. Die Steigung der schraubenförmig verlaufenden Nut 10 ist an die Steigung des Außengewindes 6 der Spindel 2 angepasst, so dass die Kugeln 11 während eines Abrollvorgangs während einer Bewegung der Spindel 2 innerhalb der Hohlwelle 3 keine Verschiebung in axialer Richtung erfahren, wodurch keine, bzw. nur äußerst geringe Rollreibungsverluste auftreten werden.

Die schraubenförmig verlaufende Nut 10 kann innerhalb des Stützlagers 8 zunächst durchgehend ausgestaltet sein, wodurch sich der Aufwand für deren Herstellung verringert. Die Umlenkungselemente 17 können in eine nachträglich angebrachte Ausnehmung eingesetzt werden, so dass mit geringem Aufwand mehrere benachbarte Wälzkörperführungen, bzw. voneinander getrennte und jeweils über Umlenkungselemente 17 zu einem geschlossenen Verlauf umgewandelte Nutenabschnitte hergestellt werden können.

Das Stützlager 8 kann getrennt von der Spindel 2 hergestellt und nachträglich an der Spindel 2 befestigt werden. Das Stützlager 8 kann beispielsweise mit einem in den Figuren dargestellten Schraubbolzen 20 mit der Spindel 2 verschraubt werden, wobei der Schraubbolzen 20 in einer mit einem Gewinde versehenen Sackbohrung 21 festgelegt wird, die an einer Stirnseite des ersten Endes 7 der Spindel 2 ausgebildet ist.

## Patentansprüche

1. Linearstellglied (1) mit einer Spindel (2) und mit einer Hohlwelle (3), wobei die Spindel (2) drehbar und längsverschiebbar in der die Spindel (2) mindestens abschnittsweise umgebenden Hohlwelle (3) gelagert ist und über ein Stützlager (8) an der Hohlwelle (3)abgestützt ist, wobei das Stützlager (8) über eine Umfangsfläche (9) der Spindel (2) vorspringende, in einer Wälzkörperführung gelagerte Wälzkörper aufweist, welche eine innere Umfangsfläche (19) der Hohlwelle (3) berühren und die Spindel (2) an der Hohlwelle (3) abstützen und wobei die Wälzkörperführung einen schraubenförmigen Verlauf längs der Umfangsfläche (9) der Spindel (2) und eine Steigung in axialer Richtung aufweist, wobei die Hohlwelle (3) innerhalb eines maximal zulässigen Bereichs einer Verlagerung der Spindel (2), bei dem sich ein erstes Ende (7) der Spindel (2) mit dem dort angeordneten Stützlager (8) immer innerhalb der dieses Ende (7) umgebenden Bereichs der Hohlwelle (3) befindet, eine zylindrische Ausnehmung mit einer in axialer Richtung gleichbleibenden Querschnittsfläche aufweist.

2. Linearstellglied (1) nach Anspruch 1, **dadurch gekennzeichnet, dass** die Wälzkörperführung ein erstes Ende (15) und ein zweites Ende (16) aufweist, die nach einer Umfangsumrundung der Wälzkörperführung längs der Umfangsfläche (9) der Spindel (2) einen axialen Versatz aufweisen und mittels eines Umlenkungselements (17) miteinander verbunden sind.

3. Linearstellglied (1) nach Anspruch 2, **dadurch gekennzeichnet, dass** das Umlenkungselement (17) einen radial nach innen versetzten Abschnitt aufweist, innerhalb dessen die darin geführten Wälzkörper die umgebende Hohlwelle (3) nicht berühren.

4. Linearstellglied (1) nach einem der vorangehenden Ansprüche, **dadurch gekennzeichnet, dass** das Stützlager (8) mehrere axial benachbart angeordnete wälzkörperführungen aufweist.

5. Linearstellglied (1) nach einem der vorangehenden Ansprüche, **dadurch gekennzeichnet, dass** die wälzkörper Kugeln (11) sind.

6. Linearstellglied (1) nach einem der vorangehenden Ansprüche, **dadurch gekennzeichnet, dass** die Wälzkörperführung eine hinterschnittene Nut (10) ist.

7. Linearstellglied (1) nach einem der vorangehenden Ansprüche, **dadurch gekennzeichnet, dass** das Stützlager (8) gesondert herstellbar und mit der Spindel (2) verbindbar ist.

## Claims

1. Linear actuator (1) having a spindle (2) and having a hollow shaft (3), the spindle (2) being mounted rotatably and longitudinally displaceably in the hollow shaft (3) which surrounds the spindle (2) at least in sections and being supported via a supporting bearing (8) on the hollow shaft (3), the supporting bearing (8) having rolling bodies which project beyond a circumferential face (9) of the spindle (2), are mounted in a rolling-body guide, make contact with an inner circumferential face (19) of the hollow shaft (3) and support the spindle (2) on the hollow shaft (3), and the rolling-body guide having a helical profile along the circumferential face (9) of the spindle (2) and a gradient in the axial direction, the hollow shaft (3) having a cylindrical recess with a constant cross-sectional area in the axial direction within a maximum permissible range of a displacement of the spindle (2), in which range a first end (7) of the spindle (2) with the supporting bearing (8) which is arranged there is always situated within that region of the hollow shaft (3) which surrounds the said end (7).

2. Linear actuator (1) according to Claim 1, **characterized in that** the rolling-body guide has a first end (15) and a second end (16) which have an axial offset after a circumferential revolution of the rolling-body guide along the circumferential face (9) of the spindle (2) and are connected to one another by means of a deflection element (17).

3. Linear actuator (1) according to Claim 2, **characterized in that** the deflection element (17) has a radially inwardly offset section, within which the rolling bodies guided therein do not make contact with the surrounding hollow shaft (3).

4. Linear actuator (1) according to one of the preceding claims, **characterized in that** the supporting bearing (8) has a plurality of rolling-body guides which are arranged axially adjacently.

5. Linear actuator (1) according to one of the preceding claims, **characterized in that** the rolling bodies are balls (11).

6. Linear actuator (1) according to one of the preceding claims, **characterized in that** the rolling-body guide is an undercut groove (10).

7. Linear actuator (1) according to one of the preceding claims, **characterized in that** the supporting bearing (8) can be manufactured separately and can be connected to the spindle (2).

## Revendications

1. Actuateur linéaire (1) comprenant une broche (2) et comprenant un arbre creux (3), la broche (2) étant montée de manière rotative et déplaçable longitudinalement dans l'arbre creux (3) entourant au moins par portions la broche (2) et étant supportée sur l'arbre creux (3) au moyen d'un palier de support (8), le palier de support (8) comprenant des corps de roulement montés dans un guide de corps de roulement et faisant saillie au-delà d'une surface circonférentielle (9) de la broche (2), lesquels corps de roulement sont en contact avec une surface circonférentielle intérieure (19) de l'arbre creux (3) et supportent la broche (2) sur l'arbre creux (3), et le guide de corps de roulement présentant une allure de forme hélicoïdale le long de la surface circonférentielle (9) de la broche (2) et une pente dans la direction axiale, l'arbre creux (3) comprenant un évidement cylindrique présentant une surface en section transversale constante dans la direction axiale à l'intérieur d'une plage admissible maximale d'un déplacement de la broche (2), dans laquelle plage une première extrémité (7) de la broche (2) avec le palier de support (8) qui y est disposé se situe toujours à l'intérieur de la région de l'arbre creux (3) entourant cette extrémité (7).

2. Actuateur linéaire (1) selon la revendication 1, **caractérisé en ce que** le guide de corps de roulement comprend une première extrémité (15) et une deuxième extrémité (16), lesquelles présentent un décalage axial après une révolution circonférentielle du guide de corps de roulement le long de la surface circonférentielle (9) de la broche (2) et sont reliées l'une à l'autre au moyen d'un élément de déviation (17).

3. Actuateur linéaire (1) selon la revendication 2, **caractérisé en ce que** l'élément de déviation (17) comprend une portion décalée radialement vers l'intérieur, à l'intérieur de laquelle les corps de roulement guidés dans celle-ci ne sont pas en contact avec l'arbre creux environnant (3).

4. Actuateur linéaire (1) selon l'une quelconque des revendications précédentes, **caractérisé en ce que** le palier de support (8) comprend plusieurs guides de corps de roulement disposés de manière axialement adjacente.

5. Actuateur linéaire (1) selon l'une quelconque des revendications précédentes, **caractérisé en ce que** les corps de roulement sont des billes (11).

6. Actuateur linéaire (1) selon l'une quelconque des revendications précédentes, **caractérisé en ce que** le guide de corps de roulement est une rainure en contre-dépouille (10).

7. Actuateur linéaire (1) selon l'une quelconque des revendications précédentes, **caractérisé en ce que** le palier de support (8) peut être fabriqué séparément et peut être relié à la broche (2).
